Europäisches Patentamt

European Patent Office

Office européen des brevets

(19)

(11) Publication number: **0 051 428**
**B1**

(12) **EUROPEAN PATENT SPECIFICATION**

(45) Date of publication of patent specification: **19.06.85**

(21) Application number: **81305075.4**

(22) Date of filing: **27.10.81**

(51) Int. Cl.⁴: **G 11 B 5/58** // G11B27/02

(54) Video signal recording and reproducing apparatus.

(30) Priority: **12.11.80 JP 159111/80**

(43) Date of publication of application:
**12.05.82 Bulletin 82/19**

(45) Publication of the grant of the patent:
**19.06.85 Bulletin 85/25**

(84) Designated Contracting States:
**AT DE FR GB NL**

(56) References cited:
**FR-A-2 362 542**
**FR-A-2 444 989**
**GB-A-2 031 640**
**GB-A-2 068 599**

**PATENTS ABSTRACTS OF JAPAN, vol. 4, no.
149, October 221, 1980, page 28 P 32**

(73) Proprietor: **SONY CORPORATION**
**7-35 Kitashinagawa 6-Chome Shinagawa-ku
Tokyo 141 (JP)**

(72) Inventor: **Sakamoto, Hitoshi**
**2-779 Zama
Zama-shi Kanagawa-ken (JP)**

(74) Representative: **Thomas, Christopher Hugo
et al
D Young & Co 10 Staple Inn
London WC1V 7RD (GB)**

Courier Press, Leamington Spa, England.

## Description

This invention relates to video signal recording and reproducing apparatus, and more particularly to video signal recording and reproducing apparatus suitable for use in a video tape recorder (VTR) having a tape editing function.

There have been two distinct approaches to increasing the recording density in a VTR of the helical scanning type.

One approach is the use of shorter wavelengths for recording, and this method has progressed successfully because of the developments in magnetic materials for making tapes, in recording/reproducing heads, and in new modulation systems for recording.

The second approach is the use of a narrow track for recording. When using a shorter wavelength, the loss in the electromagnetic transducing system increases abruptly above a certain boundary, and the signal-to-noise (S/N) ratio falls with a square or cubic function. On the other hand, when using a narrow track, the S/N ratio theoretically falls with a square root function, and in practice the deterioration of the S/N ratio is less than when using a shorter wavelength.

Nevertheless, narrow track recording has not progressed significantly because it is not easy to achieve mechanical tracking for recording and reproduction with the required accuracy of a few microns on the surface of the flexible magnetic tape.

However, the technology for automatic tracking on reproduction has been established recently, and it has become possible to perform tracking with an accuracy within a few microns even if the track has a distortion of, for example, about 100 microns.

This technology has solved one of difficulties in using the narrow track. There is, however, another tracking difficulty which occurs in edit-recording, in which information is recorded connectively, that is contiguously, under different recording conditions.

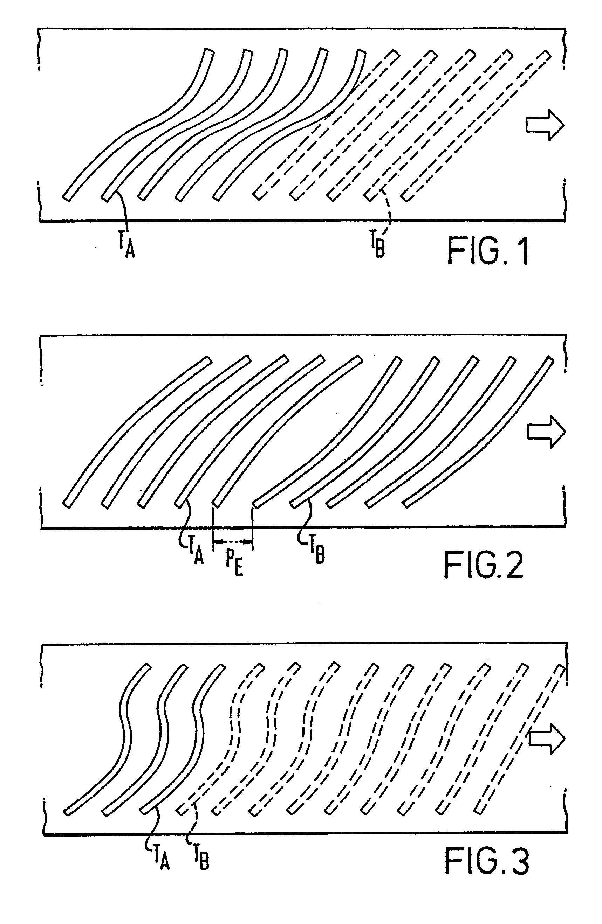

Figure 1 of the accompanying drawings shows track patterns on a magnetic tape to illustrate an extreme example of the above-mentioned problem. In the figure, tracks $T_A$ shown by solid lines have been recorded first, and tracks $T_B$ shown by dashed lines have been recorded subsequently, in an editing operation. In this example, a new track is in close contact with an old track at the editing point, or they may even intersect with each other, causing a disturbance in the reproduced picture at the editing point.

Figure 2 of the accompanying drawings shows track patterns in a more general case, in which information has been recorded consecutively by the same VTR. In this case, newly recorded tracks $T_B$ have different deformations from that of old tracks $T_A$. This might be caused by a small change in the tape itself, in the tape driving system or in the rotary drum, during the interval between the first and second recordings, or might be caused by a change in the environmental conditions between the two recordings.

In this case, since the tracks do not intersect with each other, the problem can in principle be minimized if the tracking response during reproduction is very fast. However, the difference between the track pitch at the beginning of each track and the standard track pitch at the editing point ($P_E$ in Figure 2) forces the tracking system to respond to a step variation, making it very difficult to reduce the tracking error.

In addition, if the track form varies abruptly at the editing point as shown in Figures 1 and 2, faulty tracking will persist for a considerable length of the tape in the case of a predictive tracking system which makes use of correlation of the track forms from track to track.

French patent specification A-2 362 542 discloses an apparatus in which a sampling circuit samples a tracking signal at a plurality of sampling points located in the longitudinal direction of a track, and a memory group stores the sample points.

According to the present invention there is provided a video signal recording and reproducing apparatus comprising:

a head position control means for controlling the position of a rotary head in the traverse direction of a skew track formed on a tape;

a tracking circuit which detects a relative displacement between said track and said head, and supplies a tracking signal to said head position control means;

a sampling circuit for sampling said tracking signal at a plurality of sampling points located in the longitudinal direction of said track; and

a memory group corresponding to said sampling points;

characterised by:

a comparing and correcting circuit which during reproduction before an editing joint compares stored values in said memory group with current sample values, and corrects said stored values by a constant increment the sign of which is determined in accordance with the result of said comparison;

said head position control means being controlled during recording after an editing joint for a plurality of tracks on the basis of values stored in said memory group and converging by said increments to target values.

The invention will now be described by way of example with reference to the accompanying drawings, in which:

Figures 1 to 3 show track patterns on a magnetic tape;

Figure 4 is a block diagram of a connective recording control system for a VTR;

Figure 5 is a circuit diagram of a tracking servo circuit shown in Figure 4;

Figure 6 shows track sampling points on a magnetic tape;

Figure 7 is a block diagram of a data correcting circuit shown in Figure 4;

Figure 8 shows tracks on a magnetic tape, for explaining the horizontal and vertical smoothing processes; and

Figure 9 is a three-dimensional diagram with its z-axis representing the magnitude of data stored in a memory shown in Figure 4 in the tape editing mode, the x-axis representing the longitudinal direction of a track, and the y-axis representing the longitudinal direction of the tape.

Referring first to Figure 3, this shows track patterns on a magnetic tape achieved with an embodiment of the invention. In the Figure, new tracks (shown by dashed lines) are formed following deformed existing tracks (shown by solid lines), and the deformation is gradually corrected into the normal recording trace form. Since the deformation of the existing tracks is not unique, mean value data representing the deformation is stored in a memory, and the shape of the newly deformed tracks is determined on the basis of the data stored in the memory.

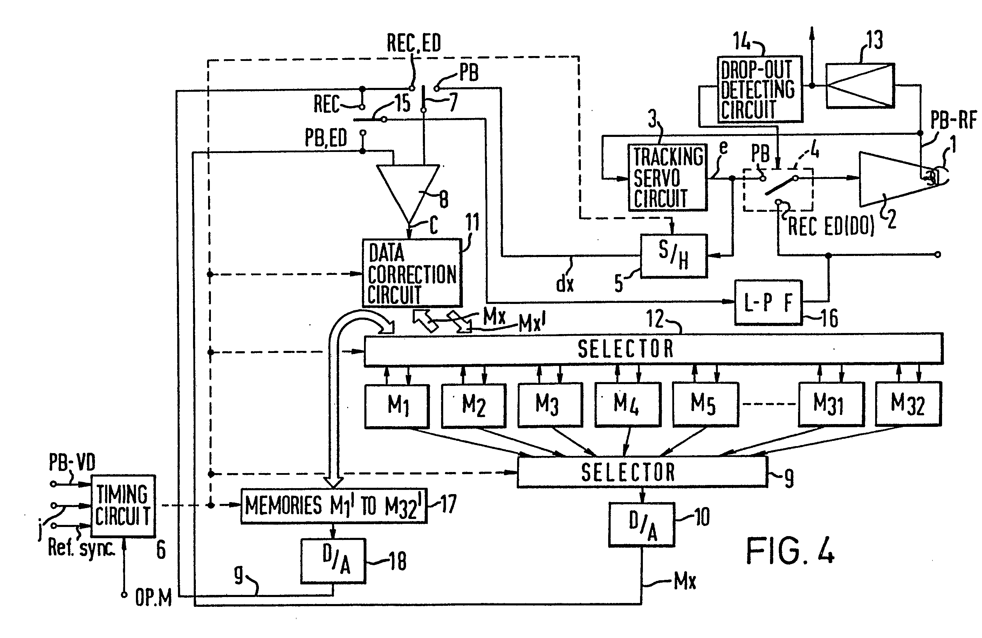

Figure 4 is a block diagram of a connective recording control system a VTR and which effects this operation. As shown in the figure, a rotary magnetic head 1 is mounted at the free end of a bimorph leaf 2 which is a lamination of two pieces of piezo-ceramic plate. The bimorph leaf 2 is supported at the other end on a rotary head drum (not shown). A control signal is supplied to the bimorph leaf 2 so that the scanning position of the head 1 is shifted in the traverse direction of the magnetic tape.

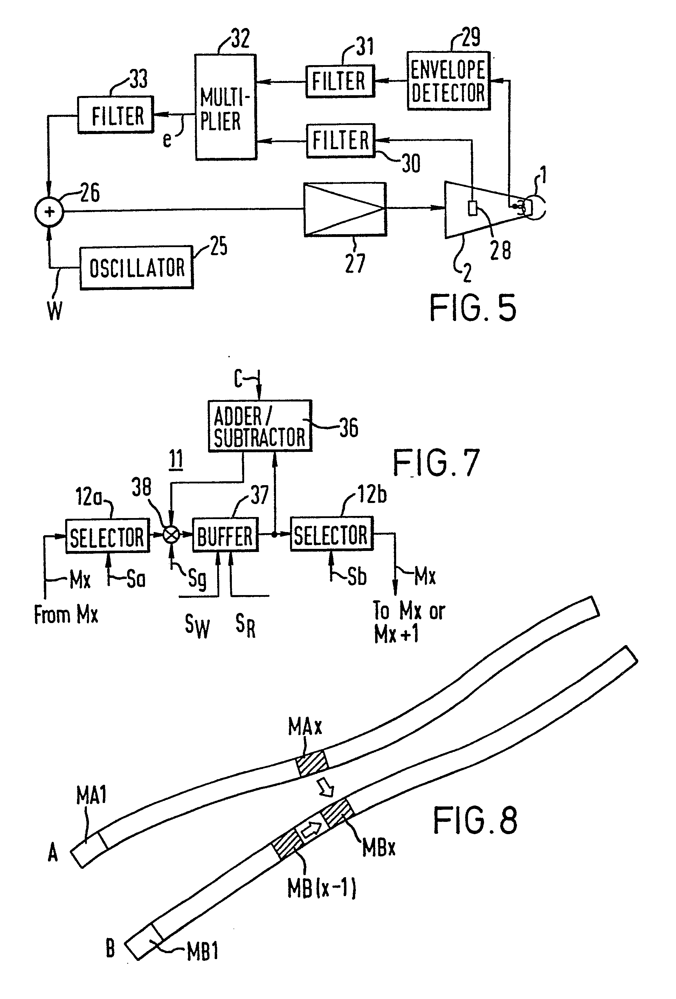

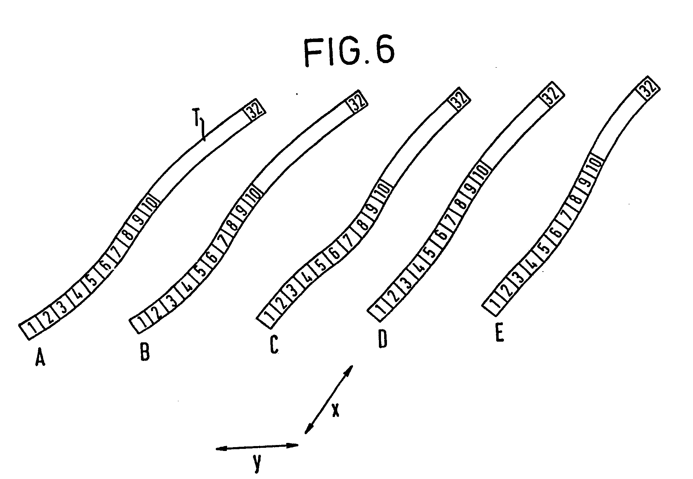

The output (reproduced radio frequency signal) PB-RF of the head 1 is supplied to a tracking servo circuit 3, which produces a tracking error signal $e$ for correcting the relative deviation between the head 1 and the track. The tracking error signal $e$ is supplied through the playback (PB) side of a selection switch 4 to the bimorph leaf 2, which adjusts the height of the head 1 so as to correct the tracking error. The tracking servo circuit 3 may be of generally known form as illustrated for example in Figure 5. An oscillator 25 generates a wobbling signal $w$ of a frequency in the range several hundred Hz to several kHz, which is supplied through an adder 26 and an amplifier 27 to the bimorph leaf 2. As a result, the head 1 is wobbled with an amplitude of 10 to 20% of the track width while it is scanning the track. The envelope of the output PB-RF from the head 1 is therefore amplitude modulated (AM) at the wobbling frequency. The degree of modulation varies depending on the head position relative to the track. For example, if the head 1 deviates from the track centre in a first direction, the output PB-RF will decrease when the head 1 swings in the first direction, and the output PB-RF will increase when the head 1 swings in the opposite direction. If the head 1 deviates in the opposite direction, the output PB-RF will vary oppositely. Accordingly, by correlation between the AM component of the output PB-RF and the wobbling signal $w$, a tracking error signal can be obtained.

For the wobbling signal $w$ for the head 1, the output of a strain gauge 28 attached on the bimorph leaf 2 can be used. The output PB-RF from the head 1 is supplied to an envelope detector circuit 29, where the AM component of the output PB-RF is detected.

The output of the strain gauge 28 and the output of the detector circuit 29 are supplied through band-limiting filters 30 and 31, respectively, to a multiplier 32, where the correlation between the signals is taken. The multiplier 32 derives the tracking error signal $e$ with its magnitude representing the deviation of the head 1 from the track and with its polarity representing the direction of the deviation. The tracking error signal $e$ is supplied through a filter 33 to the adder 26 and added to the wobbling signal $w$, then the resultant signal is supplied through the amplifier 27 to the bimorph leaf 2 as a tracking correction signal. As a result, tracking error can be corrected.

For a tracking servo circuit 3 different from that shown in Figure 5, an arrangement is known in which the difference of output levels of a plurality of heads or the difference of reproduced signal levels of a plurality of tracks is detected to obtain the tracking error signal. With another known arrangement, the head output amplitude A at the maximum peak position of the wobbling signal $w$ and the head output amplitude B at the minimum peak position are detected to obtain the tracking error signal $e$ as a function of $(A-B)/(A+B)$. With still another known arrangement, pilot signals of individual frequencies are recorded on each track or in each horizontal segment of one track, and the reproduced level of a pilot signal on one reproduced track and the cross-level of another pilot signed on an adjacent track are compared with each other to obtain the tracking error signal $e$. Any of these arrangements may be used as the tracking servo circuit shown in Figure 4.

Returning to Figure 4, in the reproduction mode, the tracking servo circuit 3 provides the tracking error signal $e$ (tracking correction signal) as described above. The tracking error signal $e$ is supplied to a sample/hold circuit 5, and the tracking error signal $e$ is sampled and held sequentially at a plurality of sampling points on one track.

Figure 6 shows sampling points (or blocks) on the track on the tape. In the example shown, 32 sampling points are assigned to one track so as to sample the tracking correction signal. The sampling pulses are produced, by a timing circuit 6 in synchronization with the reproduced vertical sync signal, for example. The output dx ($x$=1, 2, . . . ., 32) of the sample/hold circuit 5 is supplied through the PB contact of a selection switch 7 to a comparator 8.

8-bit memories M1 to M32 are provided corresponding to the sampling points 1 to 32 shown in Figure 6. An arbitrary output of the memories M1 to M32 is selected by a selector 9 and supplied to a digital-to-analog (D/A) converter 10 so that it is converted into an analog signal. Old sample data (stored data) mx ($x$=1, 2, . . ., 32) from the D/A converter 10 are supplied to the comparator 8 and compared with the current sample data from the sample/hold circuit 5. The comparator 8 determines the superiority between the sampled data dx and mx, and produces the detection signal $c$ with a high level or a low level depending on the result. The detection signal $c$ is then supplied to a data correction circuit 11. The data correction circuit 11 is supplied with the output from the memory Mx (x=1, 2, ...., 32) selected by a selector 12, and performs an adding correction or a subtracting correction by n (for example, 1 bit=1 quantized step) for the stored data mx in accordance with the detection signal $c$. The corrected data mx' is then returned through the selector 12 to the same memory Mx or the next memory Mx+1.

The data correction circuit 11 has an adder/subtractor 36 and a buffer (or register) 37 as shown in Figure 7. Data mx read out from the memory Mx is transmitted through a selector 12a and a gate 38, and written temporarily into the buffer 37. Next, the output of the buffer 37 undergoes an arithmetic operation while it is supplied through the adder/subtractor 36 and the gate 38 and returned to the input of the buffer 37, so that correction of ±n is carried out for the contents mx of the buffer 37. Addition and subtraction are switched in response to the output detection signal $c$ of the comparator 8, and the following correcting process is performed:

For mx greater than dx, mx'=mx−n

For mx less than ds, mx'=mx+n

(where n is a quantized step)

On completion of the arithmetic operation, the contents mx' of the buffer 37 are returned through a selector 12b to the memory Mx or Mx+1. Control pulses Sa and Sb for the selectors 12a and 12b, a selection control pulse Sg for the gate 38, and read and write control pulses SR and SW for the buffer 37 are supplied from the timing circuit 6 in Figure 4. These control pulses are generated in each sampling period, so that the correcting operation for the contents of the memory Mx is performed in response to each sample data dx.

In Figure 4, if a drop-out has occurred in the reproduced signal from the head 1 during the reproduction, it is detected by a drop-out detecting circuit 14 which is supplied with the output of a reproducing amplifier 13. The detection signal is supplied to the selection switch 4 so that it is switched to the DO contact side. Therefore, on the occurrence of a drop-out, the output from the memory Mx is supplied through the selector 9 and converted into an analog signal by the D/A converter 10. Then, it is supplied to a low-pass filter 16 through the PB contact of a selection switch 15, and supplied through the DO contact of the selection switch 4 to the bimorph leaf 2.

On standard recording, the contents of a non-volatile memory 17 which stores reference data for the tracking correction signal are read out by the control signal from the timing circuit 6, and converted into an analog reference tracking correction signal $g$ by a digital-to-analog (D/A) converter 18. The tracking correction signal $g$ is supplied through the REC contact of the selection switch 15 to the low-pass filter 16, and further supplied through the REC contact of the selection switch 4 to the bimorph leaf 2. Thus on standard recording, the scanning trace of the head 1 is controlled so that tracks of the standard pattern are formed.

On tape editing, in order to modify the shape of the recording tracks $T_B$ into the standard pattern as shown in Figure 3 after the editing point (connective recording point) has reached the head 1, the contents of the non-volatile memory 17 are read out sequentially in response to the control signal from the timing circuit 6 and supplied to the comparator 8 through the ED contact of the selection switch 7. Then, the contents of the memories M1 to M32 are corrected by the data correction circuit 11 so that they gradually approach the contents of the non-volatile memory 17. After the correcting operation has converged, to equalize the contents of the memories M1 to M32 to the contents of the reference non-volatile memory 17, the contents of the memories M1 to M32 are read out repetitively and converted into analog signals, then supplied to the bimorph leaf 2.

The operation of the control circuit of Figure 4 in each mode will now be described in detail.
(1) Reproduction mode and normalized recording mode.

As described above, the tracking correction signal $e$ supplied from the tracking servo circuit 3 to the bimorph leaf 2 during reproduction is sampled at a plurality of sampling points by the sample/hold circuit 5. Sample data dx at each sampling point is compared with respective data mx stored in one of the memories M1 to M32, and the memory contents are increased by one quantized step (1 bit) when the sample data dx is larger than the stored data or the memory contents are reduced by one quantized step (1 bit) when the sample data is smaller than the stored data. The result of the operation is written in the memory Mx with the address corresponding to the sampling point. By repetition of this process, data in the memories M1 to M32 vary following the sample data dx, with the correcting variation factor (gradient of variation) in one sampling being limited to one bit at maximum.

Consequently, random data at each sampling are eliminated by the repetitive 1-bit addition and subtraction, and smoothed or averaged deformation information which is common to each track is accumulated in the memories M1 to M32.

There is a difference in data processing between data mx on the previous track being taken or data mx−1 at the previous sampling point on the same track being taken for comparison with sample data dx at sampling points x(1 to 32) on the track.

That is, there are two possible directions for smoothing; the longitudinal direction of the track (x-axis direction or horizontal direction) and the longitudinal direction of the tape (y-axis direction or vertical direction), as shown in Figure 6. It would be ideal to provide a large memory extending in two dimensions of the x and y axes in Figure 6, so that data of each sampling point are checked (compared) with neighbouring data in both horizontal and vertical directions simultaneously to perform smoothing. However, it is not practical to store an infinite amount of data in the vertical direction, and also it is not necessary.

In this embodiment, although only memories M1 to M32 for the horizontal direction of one track are provided, the subsequent data processing makes it possible to smooth data over a sufficient range in the horizontal and vertical directions.

Figure 8 is a diagram of two tracks on the tape, for explaining the horizontal and vertical smoothing processes. The horizontal smoothing (in the longitudinal direction of the track) is carried out by a process in which sample data dBx at a sampling point x on the track B are compared with data mB(x−1) at the previous sampling point on the same track stored in the memory M(x−1) as shown in Figure 8 to obtain a new data mBx as the result of correction based on the data mB(x−1), and it is written in the memory Mx. In another process which is virtually the same horizontal smoothing as the above-mentioned process, sample data dBx is compared with data mBx in the memory Mx so that data mB(x+1) to be written to the next memory Mx+1 is obtained.

Such processes are performed repetitively on one track and then on the next track and so on, and sample data of the tracking correction signal e which is averaged with respect to the longitudinal direction of the track are accumulated in the memories M1 to M32. The difference of sample data dx on each track (in the longitudinal direction of the tape) cannot be a factor for determining data accumulated in the memories M1 to M32. That is, data on each track are independent on each other, and the inter-track variation of data (sample data of each track) is left unrestrained. On the other hand, smoothed sample data on one track has a restricted quantized gradient, because only one quantized step per one sampling interval is allowed, and thus the continuity of data in the longitudinal direction of the track is ensured to some extent. Accordingly, smoothed sampled data accumulated in the memories M1 to M32 by the horizontal smoothing operation can be used as correction data to be supplied to the bimorph leaf 2 in the standard recording mode. In other words, since the response error in the displacement control for the bimorph leaf 2 during recording and unstable random impulse components and noises which can cause transient vibration are sufficiently smoothed, the above sample data is suitable for use in the correction control signal for modifying the deformation of the track shape which occurs during recording.

In horizontal smoothing, data mB1 at the beginning of a track has no memory corresponding to the previous sampling point, and thus data mA1 on the previous track A is used as the base data for obtaining the data mB1. This corresponds to vertical smoothing.

In vertical smoothing, data on the previous track is used. In practice, dual memories are not provided, but smoothing is performed by a process in which the sample data dx at the sampling point x on the track B is compared with stored data mAx for the track A stored in the memory Mx, and the data mAx is modified by +1 quantized step according to the result of the comparison so as to obtain a new data mBx, which is written in the same memory Mx. In this process, as opposed to horizontal smoothing, data is not restricted to varying in the longitudinal direction of the track, and smoothed sample data between tracks have a restricted quantized gradient, allowing a variation of only one quantized step. That is, data vary continuously from one track to another.

As described previously, horizontally smoothed sample data is suitable as correction data to modify the deformation of the track which occurs during standard recording. This correction data for standard (or normalized) recording can be obtained by reproducing a reference tape in a controlled environment.

The reference tape has basically the same mechanical and electrical characteristics as those of an ordinary tape, but is made of a magnetic tape material having a mechanical shape in the centre value of the distribution for ordinary tapes and manufactured by particularly controlling the accuracy and distribution of the mechanical shape, such as the tape width, linearity, the one side expansion, and the shape of the edge surface and major surface.

The reference tape is obtained using a reference VTR having a high aging stability and very high mechanical accuracy. The temperature, humidity and cleanness of the surface are also controlled, and the pattern accuracy is checked by an optical method.

The reference tape can be deformed to some extent in a different environment, and can also be deformed when it wrapped on the tape guide system of a different VTR. In order to prevent the possibility of irreversible deformation of track patterns, the number of reproducing operations for the reference tape is limited.

When such a reference tape is reproduced in a controlled environment, and the tracking correction signal is supplied to the bimorph leaf 2 so that the magnetic head 1 follows the track, it can be considered that a smoothed sample data of the tracking correction signal virtually represents the mechanical error (the VTR specific characteristics in track deformation) of the reproducing VTR.

Accordingly, sample data processed using the foregoing horizontal smoothing under this condition can be used as correction data for modifying the track deformation in standard recording. In this case, sample data accumulated in the memories M1 to M32 in Figure 4 is supplied to the non-volatile memory 17 through the selector 12. In standard or normalized recording, the contents of the memory 17 are read out sequentially and converted into an analog correction voltage by the D/A converter 18, then supplied through the REC contact of the selection switch 15, the low-pass filter 16 and the REC contact of the selection switch 4 to the bimorph leaf 2 as a position control voltage for the movable head 1. Thus, a track deformation which occurs during recording is modified in advance, and at least the deviation of track deformation from the centre value (inherent value) can be corrected in an ordinary environment.

In particular, through the foregoing smoothing process for data, the inherent value of track deformation can be extracted separately from random deformation due to disturbance noise and the like, and it is at least possible to prevent the involvement of random deformation components other than the inherent value into recording patterns.

If recording patterns are modulated with such random deformation, correction of the tracking trace in normalized recording has no meaning or is rather harmful. If the irregularity of track deformation between tracks (in the longitudinal direction of the tape) is large, smoothed data on the complete $x-y$ plane can be obtained by switching horizontal smoothing and vertical smoothing alternately for each track. In this case, horizontal and vertical smoothing can be performed alternately by changing the writing address of the memories M1 to M32 for each track, and this can be achieved easily by control of the timing circuit 6.

(2) Editing mode (reproducing operation before editing point and recording operation after editing point).

In the reproducing operation before the editing point (the connection point of the recording), the nature of sample data which is represented by the tracking correction signal differs from correction data for normalized recording written in the non-volatile memory 17. What is required in this case is the continuity of the old and new track patterns in the neighbourhood of the editing point, rather than the modification of the inherent value of the machine itself. Therefore, it is important to obtain sample data by smoothing the tracking correction signal for a few tracks immediately before the editing point. This is possible by vertical smoothing. If there is some correlation between tracks, the variation (gradient) of sample data is not restricted in the longitudinal direction (horizontal direction) of the track as described previously, and sampling is possible on any track deformation curved or any irregular deformation. For example, a partial track deformation before the editing point due to a deflection of tape running in recording can be memorized properly as the tracking correction signal.

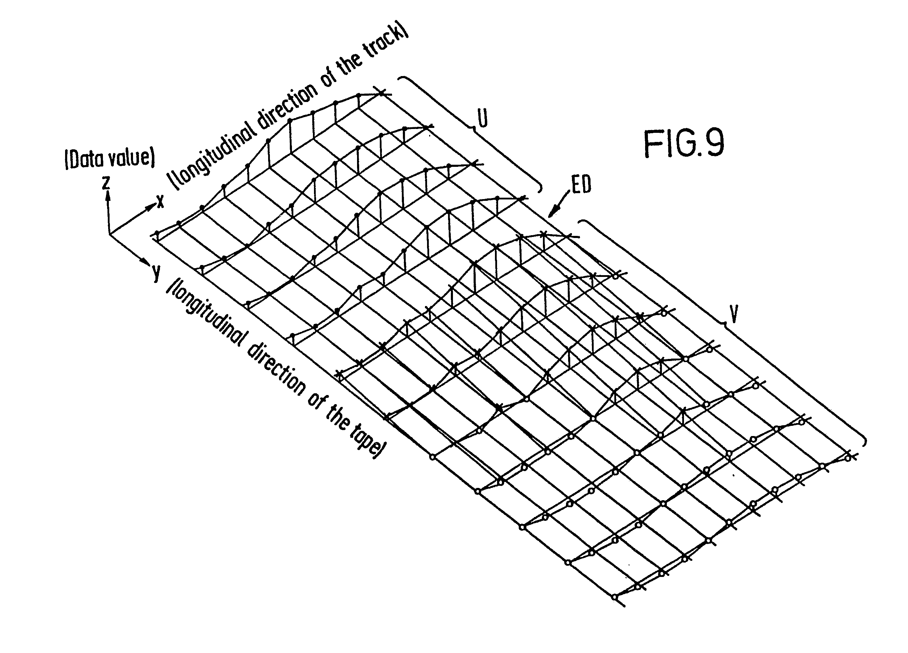

Figure 9 is a three-dimensional diagram with its $z$-axis representing the magnitude of sample data stored in the memories M1 to 32, showing its variation in the longitudinal direction of the track ($x$-direction) and the longitudinal direction of the tape ($y$-direction).

In Figure 9, portion U is a previous recording portion and black marks indicate smoothed sample data at each sampling point. The variation of data in the longitudinal direction of the tape ($y$-direction or vertical direction) is limited to a certain gradient, whereas the variation in the longitudinal direction of the track ($x$-axis or horizontal direction) is not restricted, thus deformation on each track is sampled accurately. Data sampled immediately before the editing point ED includes individual or common deformation patterns of each track from which random noises on each track (vertical direction) have been removed by smoothing.

After the editing point ED, the VTR is changed over to the edit-recording mode. At this time, sample data of the tracking correction signal obtained by vertical smoothing and stored in the memories M1 to M32 in Figure 4 is held. This data is read out from the memories M1 to M32 sequentially, and converted into the analog voltage by the D/A converter 10, then supplied through the ED contact of the selection switch 15, the low-pass filter 16 and the ED contact of the selection switch 4 to the bimorph leaf 2 as the control signal. Thus, continuity of track patterns before and after the editing point is maintained as shown in Figure 3.

After the editing point ED, data in the memories M1 to M32 will vary sequentially by the succeeding process as shown in a new recording region V in Figure 9. That is, data for correcting the mechanical characteristic of the VTR stored in the non-volatile memory 17 in Figure 4 is read out sequentially in synchronization with the reading of the main memories M1 to M32, and converted into the analog signal by the D/A converter 18, and then supplied through the ED contact of the selection switch 7 to the comparator 8. On the other hand, the D/A converted value from the output of the memories M1 to M32 is supplied to the bimorph leaf 2 and also to another input of the comparator 8, and the comparator 8 compares both signals at each sampling point and supplies a correction signal $c$ to the data correcting circuit 11 if there is a difference. The data correcting circuit 11 performs adding or subtracting correction by a certain value n (for example, one quantized step) for the contents of the memories M1 to M32 in response to the correction signal as in the case of the reproduction mode. Consequently, the contents of the memories M1 to M32 approach the data stored in the non-volatile memory 17 with a gradient limited in the vertical direction to a certain value as shown by marks 'x' in Figure 9. The time taken to reach the final value differs in each case. Finally, however, the data coincides with the contents of the non-volatile memory 17 and is fixed there as shown by circles in Figure 9.

Consequently, in the recording portion after the editing point, the analogy (continuity) of track deformation relative to the old recording portion decays gradually as shown in Figure 3, and finally it becomes a linear recording pattern. The reason why the track shape is varied gradually in edit-recording is as follows.

In the reproduction mode before the editing point, the tracking correction signal (relative tracking error) is considered to include a component of the inherent value of the track deformation itself, a random component during reproduction, and a component of track deformation corresponding to some specific reason such as the nature of the reproducing apparatus. At the editing point, these three components need to be included in the data so as to maintain the continuity of track patterns, however, after the editing point, it is not correct to retain all of the components. Since tape editing is generally performed a multiple number of times, the random component could be accumulated. It is also possible that track deformation having some specific trend would accumulate and grow, and this must be prevented.

The highest possible track deformation having a specific trend is an offset error of the tracking servo system (a system including the tracking servo circuit 3 and the bimorph leaf 2) in Figure 4, or an offset of the recording position on the track in the drum servo system, capstan servo system or tension servo system in different operational modes that occurs when the reproduction mode is changed over to the recording mode at the editing point. Theoretically, track deformation can occur due to the difference of recording and reproducing regions on the magnetic head on its confronting surface of the tape when the magnetic head is in unbalanced contact with the tape.

Even if the track deformation is very small, the recording track pattern can grow into an abnormal shape due to the cumulative effect of joining several tens of times to several hundreds of times. The random component, even it if it is accumulated, has less possibility of causing the growth of deformation, whereas the offset component of one specific polarity or direction is accumulated directly. In particular, if an offset between the reproducing trace and the recording trace has occurred over a certain range due to unbalanced contact between the head above the track and the tape, accumulation of the offset value can even lead to the formation of patterns of a different shape. It is possible to reduce the offset component (or residual error) of the tracking error during reproduction down to approximately 1% by means of the tracking servo circuit of the vibration correlative type shown in Figure 5, however, there is still a possibility of inducing a track deformation by one pitch by accumulation of deformations due to edit-joining say one hundred times.

Therefore, the continuity of patterns and the elimination of offset deformation at the editing point are accomplished at the same time by leading the data in the memories M1 to M32 to the standard correction data stored in the non-volatile memory 17 after the editing point. From the view point of probability, it is possible that more accurate connective recording track patterns can be formed with sample data in the memories M1 to M32 left unchanged. However, in considering the worst condition as mentioned above and the usefulness of correction or modification of recording tracks so that the operating range of the tracking servo system is not exceeded during reproduction it can be said that approximation to data in the non-volatile memory 17 is more correct.

If the track pattern varies greatly in recording after the editing point, the track interval can be changed, resulting in difficult tracking in reproduction. However, as the track deformation approaches a certain shape through a process similar to vertical smoothing as described above, the variation of the track pitch is small and the correlation of the shapes between tracks is not disturbed much, thus no problem will occur even if the response of the tracking servo system is not high during reproduction.

(3) Abnormal operation in reproduction.

The control circuit of Figure 4 performs smoothing for the tracking correction signal $e$ in the horizontal or vertical direction during reproduction to produce sample data, and stores the data in the memories M1 to M32. This sample data can be used as an auxiliary tracking correction signal when an abnormal drop-out has occurred in the reproduced output from the head 1. That is, by switching the selection switch 4 to the DO side in response to the output from the drop-out detecting circuit 14 in Figure 4, tracking can be continued without any problem even if the tracking servo circuit 3 fails to operate at the occurrence of a drop-out. When the drop-out has ceased, the tracking servo system responds quickly and the normal operation is regained in a very short time.

Also in this case, smoothed or averaged sample data derived from the tracking correction signal has a significant meaning. For example, if an immediate data without smoothing and stored at the previous track was to be used as the auxiliary tracking correction signal against a drop-out as mentioned above, the reproduction system would be greatly disturbed to use data of critical tracking immediately before the drop-out has occurred. If this data is wrong, the system would be disturbed much more, possibly resulting in a failure of recovery. By use of smoothed data, there is no possibility at all of falling into such an unrecoverable 'hole' in the operation.

In Figure 4, each component block is controlled by the output from the timing circuit 6, the function of which is switched by the operation mode signal OP-M including REC (recording), PB (reproduction) and ED (editing). The synchronizing reference for the timing circuit 6 is the reproduction sync signal PB-VD during reproduction or the external reference sync signal Ref. Sync during recording. For the varied-speed reproduction, the head jump signal $j$ is supplied, by which the synchronizing reference for the timing circuit 6 is varied so that the sampling point on the track does not lose the correspondence with the memory address.

As described above, the tracking signal is supplied to the head position control means in order to correct the deviation of the head relative to the track on the tape, the tracking signal is sampled at a plurality of sampling points in the longitudinal direction of the track, the contents of memories corresponding to the sampling points are compared with the current sample value so as to modify the contents of the memories in a certain variation factor depending on the result of comparison thereby providing an averaged sample value of the tracking signal, and the head position control means is controlled in accordance with the sample value after the tape editing point (connection). Accordingly, the continuity of track deformation at the editing point is achieved and tracks do not intersect with each other in high speed recording, whereby stable pictures can be reproduced without any disturbance at the editing point. In addition, the sample value of the averaged tracking signal is used to determine the track deformation following the editing point, allowing the elimination of the effect of the singular value or abnormal value other than the inherent value of track deformation before the editing point, and thus the editing joint can be made stable.

## Claims

1. A video signal recording and reproducing apparatus comprising:
a head position control means (2) for controlling the position of a rotary head (1) in the traverse direction of a skew track formed on a tape;
a tracking circuit (3) which detects a relative displacement between said track and said head (1), and supplies a tracking signal to said head position control means (2);
a sampling circuit (5) for sampling said tracking signal at a plurality of sampling points located in the longitudinal direction of said track; and
a memory group (M1 to M32) corresponding to said sampling points;
characterised by:
a comparing and correcting circuit (8, 11) which during reproduction before an editing joint compares stored values in said memory group (M1 to M32) with current sample values, and corrects said stored values by a constant incrememt the sign of which is determined in accordance with the result of said comparison;
said head position control means (2) being controlled during recording after an editing joint for a plurality of tracks on the basis of values stored in said memory group (M1 to M32) and converging by said increments to target values.

2. A video signal recording and reproducing apparatus according to claim 1 further comprising a switching means (7) for supplying said target values instead of said current sample values to said comparing and correcting circuit (8, 11) after said editing joint, whereby stored values in said memory group (M1 to M32) converge to said target values.

3. A video signal recording and reproducing apparatus according to claim 1 or claim 2 wherein said increment is one bit.

4. A video signal recording and reproducing apparatus according to claim 1 wherein on the occurrence of a drop-out, the output of said memory group (M1 to M32) is used to supply a tracking signal to said head position control means (2).

5. A video signal recording and reproducing apparatus according to claim 1 wherein sample values accumulated in said memory group (M1 to M32) during reproduction of a reference tape are supplied to a non-volatile memory (17) to produce and store said target values.

## Patentansprüche

1. Videosignal-Aufnahme- und Wiedergabegerät mit einer Kopf-Positionssteuereinrichtung (2) zur Steuerung der Position eines rotierenden Kopfes (1) in der Querrichtung einer auf einem Band gebildeten Schrägspur,
mit einer Spurnachlaufschaltung (3), welche eine relative Verschiebung zwischen der Spur und dem Kopf (1) ermittelt und welche ein Spurnachlaufsignal an die Kopf-Positionssteuereinrichtung (2) abgibt,
mit einer Abtastschaltung (5), welche das Spurnachlaufsignal an einer Vielzahl von Abtastpunkten abtastet, die in der Längsrichtung der betreffenden Spur liegen,
und mit einer den betreffenden Abtastpunkten entsprechenden Speichergruppe (M1 bis M32), dadurch gekennzeichnet,
daß eine Vergleicher- und Korrekturschaltung (8, 11) vorgesehen ist, die während der Wiedergabe vor einer Schnittverbindungsstelle die in der genannten Speichergruppe (M1 bis M32) gespeicherten Werte mit den gerade auftretenden Abtastwerten vergleicht und die die gespeicherten Werte um einen konstanten Schritt korrigiert, dessen vorzeichen in Übereinstimmung mit dem Ergebnis des betreffenden Vergleichs festgelegt ist,
und daß die Kopf-Positionssteuereinrichtung (2) während der Aufnahme nach einer Schnittverbindungsstelle für eine Vielzahl von Spuren auf der Grundlage der Werte gesteuert wird, die in der genannten Speichergruppe (M1 bis M32) gespeichert sind und die durch die genannten Schritte zu Zielwerten hin konvergieren.

2. Videosignal-Aufnahme- und Wiecergabegerät nach Anspruch 1, umfassend ferner eine Schalteinrichtung (7) für die Abgabe der Zielwerte anstelle der gerade vorliegenden Abtastwerte an die Vergleicher- und Korrekturschaltung (8, 11) nach der genannten Schnittverbindungsstelle, wodurch die in der genannten Speichergruppe (M1 bis M32) gespeicherten Werte zu den Zielwerten hin konvergieren.

3. Videosignal-Aufnahme- und Wiedergabegerät nach Anspruch 1 oder 2, wobei der genannte Schritt ein Bit beträgt.

4. Videosignal-Aufnahme- und Wiedergabegerät nach Anspruch 1, wobei auf das Auftreten eines Aussetzers hin das Ausgangssignal der genannten Speichergruppe (M1 bis M32) dazu herangezogen wird, ein Spurnachlaufsignal an die Kopf-Positionssteuereinrichtung (2) abzugeben.

5. Videosignal-Aufnahme- und Wiedergabegerät nach Anspruch 1, wobei die in der genannten Speichergruppe (M1 bis M32) während der Wiedergabe eines Bezugsbandes akkumulierten Abtastwerte einem nichtflüchtigen Speicher (17) zur Erzeugung und Speicherrung der genannten Zielwerte zugeführt werden.

**Revendications**

1. Appareil d'enregistrement et de reproduction de signaux vidéo, comportant; un dispositif de commande de position de tête (2) destiné à commander la position d'une tête tournante (1) dans la direction transversale d'une piste oblique formée sur une bande;
un circuit d'alignement (3) qui détecte un déplacement relatif entre ladite piste et ladite tête (1) et qui fournit un signal d'alignement audit dispositif de commande de position de tête (2);
un circuit d'échantillonnage (3) destiné à échantillonner ledit signal d'alignement en plusieurs points d'échantillonnage situés dans la direction longitudinale de ladite piste; et un groupe de mémoires (M1—M32) correspondant auxits points d'échantillonnage, caractérisé:
un circuit de comparaison et de correction (8, 11) qui, pendant la reproduction avant une liaison de montage, compare des valeurs mémorisées dans ledit groupe de mémoires (M1—M32) avec des valeurs d'échantillons en cours, et qui corrige lesdites valeurs mémorisées par un incrément constant dont le signe est déterminé en fonction du résultat de ladite comparaison, ledit dispositif de commande de position de tête (2) étant commandé pendant l'enregistrement après une liaison de montage pendant plusieurs pistes sur la base de valeurs mémorisées dans ledit groupe de mémoires (M1—M32), et convergent par lesdits incréments vers des valeurs cible.

2. Appareil d'enregistrement et de reproduction de signaux vidéo selon la revendication 1, comportant en outre un dispositif de commutation (7) qui fournit lesdites valeurs cibles au lieu desdites valeurs d'échantillons en cours auxdits circuits de comparaison et de correction (8, 11) après ladite liaison de montage, de manière que des valeurs mémorisées dans ledit groupe de mémoires (M1—M32) convergent vers lesdits valeurs cible.

3. Appareil d'enregistrement et de reproduction de signaux vidéo selon la revendication 1 ou 2, dans lequel edit incrément est 1 bit.

4. Appareil d'enregistrement et de reproduction de signaux vidéo selon la revendication 1, dans lequel à l'apparition d'un évanouissement, la sortie dudit groupe de mémoires (M1—M32) est utilisée pour fournir un signal d'alignement audit dispositif de commande de position de tête (2).

5. Appareil d'enregistrement et de reproduction de signaux vidéo selon la revendication 1, dans lequel des valeurs d'échantillons accumulés dans ledit groupe de mémoires (M1—M32) pendant la reproduction d'une bande de references sont fournies à une mémoire rémanente (17) pour produire et mémoriser lesdites valeurs cible.

FIG.1

FIG.2

FIG.3

FIG. 4

0 051 428

FIG. 5

FIG.7

FIG.8

# FIG.6

A    B    C    D    E

x

y

FIG.9

(Data value)

z

x (longitudinal direction of the track)

y

(longitudinal direction of the tape)

U

ED

V

0 051 428